## Europäisches Patentamt

## European Patent Office

## Office européen des brevets

(11) Numéro de publication: **0 127 870 B1**

(12)

# FASCICULE DE BREVET EUROPEEN

(45) Date de publication du fascicule du brevet:
28.10.87

(51) Int. Cl.⁴: **G 01 S 17/42**, G 01 S 7/48, G 01 S 17/74

(21) Numéro de dépôt: **84106107.0**

(22) Date de dépôt: **29.05.84**

(54) **Dispositif pour détecter une caméra infrarouge adverse.**

(30) Priorité: **31.05.83 FR 8308968**

(43) Date de publication de la demande:
**12.12.84 Bulletin 84/50**

(45) Mention de la délivrance du brevet:
**28.10.87 Bulletin 87/44**

(84) Etats contractants désignés:
**DE FR GB NL**

(56) Documents cités:
**FR - A - 2 318 429**
**FR - A - 2 505 505**
**US - A - 3 946 233**
**US - A - 4 112 300**

(73) Titulaire: **Compagnie Industrielle des Lasers CILAS ALCATEL, Route de Nozay, F-91460 Marcoussis (FR)**

(72) Inventeur: **Rovati, Philippe, B10 Résidence Rochebrune, F-91220 Bretigny Sur Orge (FR)**
Inventeur: **Jourdain, Claude, 44, rue Henri Matisse, F-91390 Morsang Sur Orge (FR)**
Inventeur: **de Witte, Oliver, 27, avenue du Bois des Roches, F-91190 Gif Sur Yvette (FR)**

(74) Mandataire: **Weinmiller, Jürgen et al, Lennéstrasse 9 Postfach 24, D-8133 Feldafing (DE)**

**Description**

La présente invention concerne un dispositif pour détecter une caméra infrarouge adverse.

On sait qu'une telle caméra comporte un système de balayage périodique par lignes de l'énergie infrarouge située dans un secteur de l'espace, un système optique convergent capable de concentrer l'énergie infrarouge balayée par le système de balayage, un détecteur électrooptique infrarouge disposé pour recevoir l'énergie concentrée par le système optique, et un système de visualisation relié au système de balayage et à la sortie électrique du détecteur pour former sur un écran l'image thermique du secteur.

Il a été proposé un dispositif pour détecter une telle caméra (voir le document FR-A 2 505 505), ce dispositif étant d'un type comportant
– un générateur laser émettant un premier faisceau infrarouge,
– un réflecteur orientable pour diriger ledit faisceau infrarouge vers la caméra, le système optique de la caméra renvoyant alors vers le réflecteur des signaux infrarouges,
– un récepteur électro-optique infrarouge disposé pour recevoir lesdits signaux infrarouges réfléchis par le réflecteur, ce récepteur comportant une première et une deuxième sorties électriques, le récepteur délivrant sur sa première sortie des signaux électriques de réception représentatifs de l'intensité des signaux infrarouges et délivrant sur sa deuxième sortie des signaux électriques d'écartométrie représentatifs de l'écart entre un point de référence de la surface sensible du récepteur et les points de réception sur cette surface des signaux infrarouges,
– un système d'asservissement relié à la deuxième sortie électrique du récepteur pour recevoir les signaux électriques d'écartométrie, ce système étant apte à commander l'orientation du réflecteur de façon à diminuer ledit écart,
– un télémètre électro-optique
– et des moyens d'orientation du télémètre vers la caméra adverse, ces moyens étant reliés au système d'asservissement de l'orientation du réflecteur, le télémètre étant capable de délivrer périodiquement l'information de la distance de la caméra, un premier point lumineux étant formé sur l'écran de la caméra adverse chaque fois que le système de balayage dirige vers le détecteur l'énergie du faisceau laser infrarouge concentré par le système optique, celui-ci renvoyant vers le dispositif, par effet catadioptrique, un signal infrarouge constitué par une partie de cette énergie concentrée, le récepteur délivrant en réponse un signal électrique de réception sur sa première sortie électrique.

Cependant le dispositif proposé ne peut être utilisé en pratique, car l'adversaire repère immédiatement le dispositif de détection par la formation des points lumineux sur l'écran de sa caméra, et il est alors facile pour lui de pointer une arme dans la direction du dispositif de détection.

La présente invention a pour but de réaliser un dispositif pour détecter une caméra infrarouge adverse sans qu'il soit possible à l'adversaire de repérer ce dispositif.

Elle a pour objet un dispositif du type spécifié ci-dessus, caractérisé en ce qu'il comporte en outre
– un circuit de traitement relié au télémètre pour recevoir l'information de la distance de la caméra et relié à la première sortie électrique du récepteur pour mesurer les intervalles de temps entre les signaux électriques de réception, de façon à déterminer la fréquence de formation des lignes et la fréquence de formation des images du système de balayage de la caméra, ce circuit de traitement étant apte à déterminer un temps de retard à partir de la distance de la caméra et de ces fréquences,
– un circuit de retard, connecté au circuit de traitement pour délivrer, à la cadence de formation des images, un signal électrique de commande retardé dudit temps de retard par rapport au signal de réception

– et des moyens pour émettre un deuxième faisceau infrarouge formé d'une suite d'impulsions laser vers le réflecteur parallèlement à l'axe d'émission du générateur laser, ces moyens étant connectés au circuit de retard de façon qu'une impulsion soit émise chaque fois qu'un signal électrique de commande est émis, cette impulsion laser étant réfléchie vers la caméra par le réflecteur et apparaissant sur l'écran de la caméra sous forme d'un deuxième point lumineux très intense, le temps de retard déterminé par le circuit de traitement étant supérieur à une valeur minimale et inférieur à une valeur maximale, la valeur minimale étant déterminée pour que le deuxième point représente une image d'un objet factice dont la distance au dispositif est supérieure à une distance prédéterminée, la valeur maximale étant déterminée pour que le deuxième point provoque un éblouissement de l'écran, cet éblouissement étant assez fort pour que le premier point ne soit plus visible.

Des formes particulières d'exécution de l'objet de la présente invention sont décrites ci-dessous, à titre d'exemple, en référence aux dessins annexés, dans lesquels

la fig. 1 représente schématiquement un mode de réalisation du dispositif selon l'invention,
la fig. 2 est un diagramme d'impulsions illustrant le fonctionnement du dispositif représenté sur la figure 1,
la fig. 3 est une vue schématique de l'image qui apparaît sur l'écran d'une caméra détectée par le dispositif illustré par la figure 1
et la figure 4 est une vue schématique de l'image qui apparaît sur l'écran d'une caméra détectée par une variante du dispositif représenté sur la figure 1.

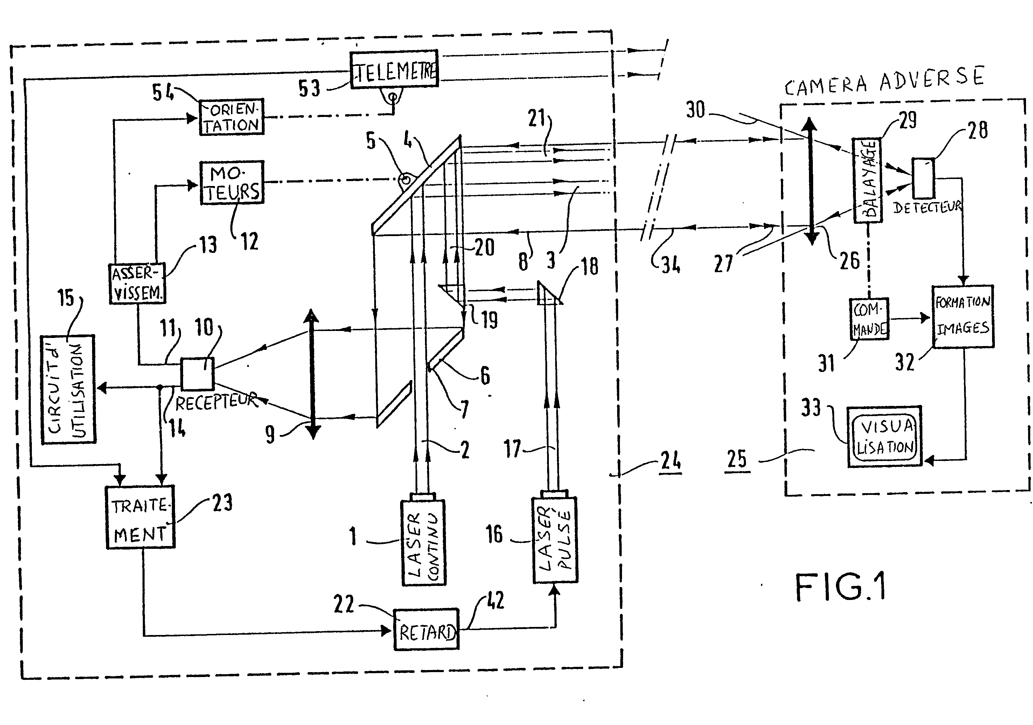

Sur la figure 1, est représenté un générateur laser continu 1 d'un premier faisceau infrarouge 2 qui est réfléchi suivant un faisceau 3 sur un miroir plan 4, orientable autour d'une rotule 5. Un autre miroir plan 6 muni d'une ouverture centrale 7 est disposé entre le générateur laser 1 et le miroir 4 de manière que le faisceau 2 passe à travers l'ouverture 7. Le miroir orientable 4 reçoit en retour un faisceau infrarouge 8 parallèle au faisceau 3, mais dirigé en sens inverse de celui-ci. Le faisceau 8 est réfléchi successivement sur les miroirs 4 et 6 qui le dirigent sur la surface sensible d'un récepteur électro-optique infrarouge 10 à travers un système optique de concentration 9. Le récepteur 10 comporte une sortie électrique 11 connectée à des moteurs 12 à travers un circuit d'asservissement 13. Les moteurs 12 sont reliés mécaniquement au miroir 4, de façon à l'orienter autour de la rotule 5. Le récepteur 10 comporte une autre sortie électrique 14 connectée à un circuit d'utilisation 15. Un générateur laser 16 de type pulsé émet un deuxième faisceau infrarouge 17 réfléchi sucessivement sur deux prismes 18 et 19, de manière à former un faisceau 20, parallèle au faisceau 2 et réfléchi sur le miroir 4 suivant un faisceau 21 parallèle au faisceau 3. Le générateur laser 16 est connecté électriquement à la sortie d'un circuit de retard 22 relié à la sortie électrique 14 du récepteur 10 à travers un circuit de traitement 23. Un télémètre laser 53 est relié mécaniquement à des moyens d'orientation 54 de ce télémètre, ceux-ci étant connectés au circuit d'asservissement 13. La sortie électrique du télémètre 53 est reliée au circuit de traitement 23. Ces différents éléments forment un dispositif de détection 24.

La figure 1 montre également une caméra infrarouge 25 détectée par le dispositif 24. La caméra 25 comporte un système optique convergent 26 capable de concentrer un faisceau 27 sur la surface sensible d'un détecteur électrooptique infrarouge 28. Entre le système optique 26 et le détecteur 28 est disposé un système de balayage périodique 29, par lignes, d'un secteur de l'espace 30. Le système de balayage 29, qui est d'un type analogue à celui d'une caméra de télévision et peut comporter par exemple deux éléments optiques mobiles l'un par rapport à l'autre, est relié à un circuit de commande 31. La caméra 25 comporte en outre un circuit de formation d'images 32 comprenant deux entrées reliées respectivement au circuit 31 et à la sortie électrique du détecteur 28. La sortie du circuit 32 est reliée à un système de visualisation 33 muni d'un écran.

Le dispositif de détection 24 décrit précédemment et illustré par la figure 1 fonctionne de la manière suivante.

Au début, les moteurs 12 sont alimentés par un circuit d'acquisition non représenté sur la figure, ce circuit permettant de commander l'orientation du miroir 4 de façon que le faisceau 3 explore systématiquement l'espace environnant. Dès que le faisceau 3 rencontre la caméra infrarouge 25, son système optique 26 renvoie en sens inverse, par effet catadioptrique, un faisceau très intense et de faible divergence. Ce faisceau est reçu en 8 sur le miroir 4 et, après réflexions successives sur les miroirs 4 et 6 et traversée du système optique 9, est concentré sur la surface sensible du récepteur 10. Dès qu'un tel faisceau infrarouge de retour est reçu par le récepteur 10, le circuit d'acquisition est déconnecté des moteurs 12, ceux-ci étant alors reliés au circuit d'asservissement 13 comme représenté sur la figure 1. La sortie 11 du récepteur 10, qui peut être par exemple du type à quatre quadrants, délivre un signal écartométrique dont l'amplitude est représentative de l'écart entre un point de référence de la surface sensible du récepteur 10 et le point de réception sur cette surface du faisceau de retour. Le circuit d'asservissement 13 commande l'orientation du miroir 4 de façon à diminuer cet écart. Le faisceau 3 reste donc en permanence dirigé vers la caméra 25. De plus le circuit d'asservissement 13 commande les moyens d'orientation 54 de façon à diriger l'axe d'émission du télémètre 53 parallèlement au faisceau. Le télémètre 53 délivre périodiquement sur sa sortie électrique l'information de la distance de la caméra.

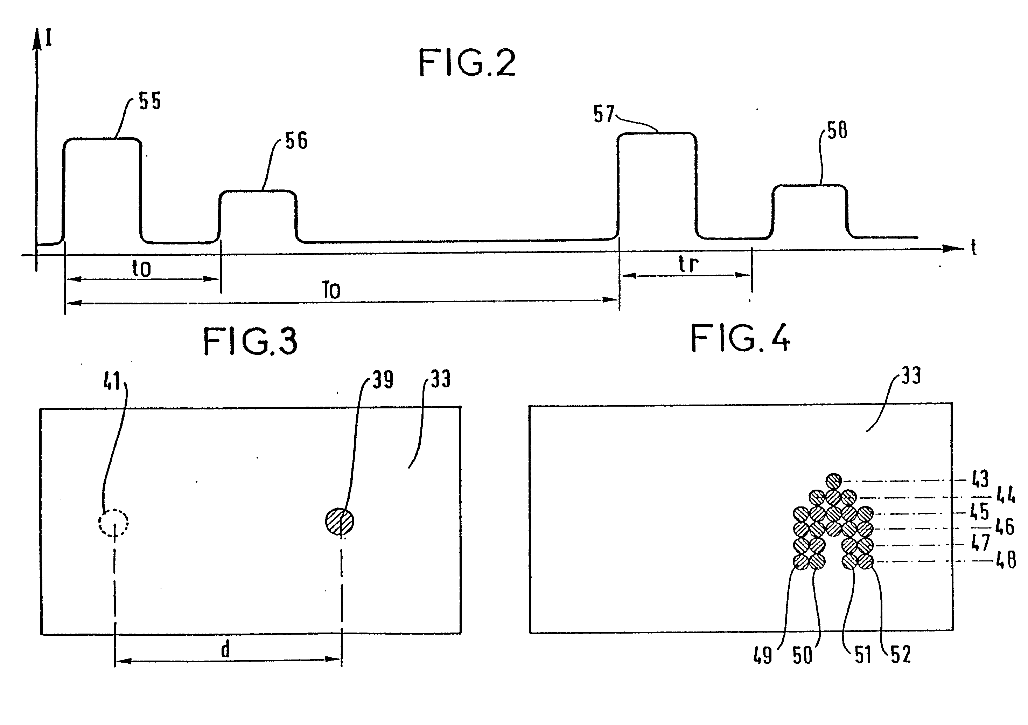

Le système optique 26 de la caméra 25 concentre le faisceau 27 (représenté par des flèches à deux empennes) provenant du générateur laser 1, dans le plan de la surface sensible du détecteur 28. Chaque fois que le système de balayage de la caméra dirige cette énergie concentrée vers le détecteur, un point lumineux 41 se forme sur l'écran de la caméra (voir figure 3) et le système optique 26 renvoie vers le dispositif 24, par effet catadioptrique, un signal infrarouge 34 (représenté par des flèches à une seule empenne) constitué par une partie de cette énergie concentrée. Le faisceau de retour 8 dirigé sur le récepteur 10 est donc formé par une séquence de signaux infrarouges.

La figure 2 représente une telle séquence dans le cas où le détecteur de la caméra comporte plusieurs groupes de cellules. Chaque signal infrarouge comprend alors une suite d'impulsions infrarouges dont l'enveloppe forme un signal de forme rectangulaire.

La figure 2 est rapportée à deux axes de coordonnées rectangulaires, l'axe des abscisses sur lequel est porté le temps t et l'axe des ordonnées sur lequel est portée l'intensité I des signaux. On a supposé que seulement deux lignes successives de balayage passent dans la zone de concentration de l'énergie laser à chaque formation d'image. Le premier passage dans cette zone donne lieu à un signal 55 et le deuxième passage à un signal 56, ces signaux étant de forme rectangulaire. Le signal 55, de plus grande amplitude, correspond sensiblement au balayage du point milieu de la zone de concentration, alors que le signal 56, de moindre amplitude, correspond au balayage d'une partie périphérique de cette zone.

L'intervalle de temps $t_0$ entre les fronts de montée des signaux 55 et 56 est égal à la période de formation des lignes de balayage. Deux signaux identiques à 55 et 56 apparaissent en 57 et 58 lorsque le système de balayage forme l'image suivante. L'intervalle de temps $T_0$ entre les fronts de montée des signaux de grande amplitude 55 et

5 0 127 870 6

57 est égal à la période de formation des images du balayage.

Le récepteur 10 délivre sur sa sortie 14 des signaux électriques représentatifs des signaux infrarouge qu'il reçoit. Ces signaux électriques sont transmis au circuit d'utilisation 15 qui commande en retour par exemple un tir d'artillerie en direction de la caméra. Ces signaux électriques sont également transmis au circuit de traitement 23 qui reçoit aussi, à chaque instant, l'information de la distance de la caméra mesurée par le télémètre 53. Le circuit de traitement 23 mesure les périodes $t_o$ et $T_o$ et en déduit les fréquences correspondantes des lignes et des images formées par le balayage de la caméra. Le circuit de traitement 23, qui a en mémoire certaines caractéristiques des éléments du dispositif (telles que la puissance des générateurs laser 1 et 16), est capable de calculer en outre un temps de retard $t_r$ d'une manière qui sera expliquée par la suite.

Le circuit de retard 22 délivre à sa sortie un signal électrique de commande retardé du temps $t_r$ par rapport au front de montée du deuxième signal électrique 57 de grande amplitude. Le générateur laser pulsé 16 émet une impulsion de forte puissance et de même longueur d'onde que celle du rayonnement infrarouge émis par le générateur laser 1, dès que le signal électrique de commande est délivré. Cette impulsion est émise à une cadence qui correspond à la période de formation des images de la caméra. Après réflexion sur les prismes 18–19 et sur le miroir 4, et après traversée du système optique 26 de la caméra, cette impulsion est dirigée par le système de balayage 29 vers le détecteur 28 avec un retard égal à $t_r$ augmenté du temps de propagation de la lumière du dispositif à la caméra. Comme il est visible sur la figure 3, cette impulsion apparaît sur l'écran du dispositif de visualisation 23 sous forme d'un deuxième point lumineux 39 décalé d'une distance d par rapport au premier point lumineux 41 correspondant à l'énergie laser émise par le générateur laser 1. La luminosité du point 39 est telle qu'elle provoque un éblouissement de l'écran du dispositif 33, de sorte que le point lumineux 41 (représenté en traits interrompus) n'est plus visible sur cet écran. En pratique, le point 41 n'apparait pas sur l'écran, car il disparait après la deuxième image formée par le système de balayage. L'observateur adverse voit donc uniquement le nouveau point lumineux 39 qui est l'image d'un objet factice situé à une distance D du dispositif de détection. Cet observateur dirige alors le tir de son artillerie dans une fausse direction, le dispositif de détection et le matériel militaire qui l'entoure étant ainsi préservé.

Le temps de retard $t_r$ déterminé par le circuit de traitement doit être suffisamment long pour que la distance D soit suffisante pour protéger en pratique le dispositif de détection contre la réaction de l'artillerie ennemie. Le circuit 23 calcule donc d'abord une valeur minimale de ce temps de retard afin de satisfaire à cette condition.

Par ailleurs le temps $t_r$ doit être suffisamment court pour que le deuxième point lumineux provoque effectivement un éblouissement de l'écran de la caméra. Le circuit 23 calcule par conséquent une valeur maximale du temps de retard afin de satisfaire à cette nouvelle condition.

Lorsque ces valeurs minimale et maximale (corrigées pour tenir compte de la durée de propagation de la lumière) sont inférieures à la période de formation des lignes de la caméra, le circuit 23 peut déterminer un temps $t_r$ égal par exemple à la moyenne arithmétique entre la valeur maximale et la valeur minimale.

Dans un deuxième mode de réalisation du dispositif selon l'invention, le générateur laser continu 1 peut être remplacé par un générateur laser émettant des impulsions à une haute cadence de répétition par exemple de l'ordre de 30 kHz. Cela présente l'avantage de disposer d'une puissance plus élevée et d'augmenter la portée du dispositif.

Dans un troisième mode de réalisation du dispositif selon l'invention, le générateur laser pulsé 16 ainsi que les prismes 18 et 19 (voir figure 1) sont supprimés et la sortie 42 du circuit de retard 22 est reliée directement à un système de déclenchement associé au laser 1. Grâce à ce circuit de déclenchement, le générateur laser continu 1 est capable d'émettre des impulsions suivant le même trajet 2, 3 que le faisceau continu. On obtient ainsi un dispositif plus simple qui ne comporte plus qu'un seul laser.

Dans un quatrième mode de réalisation du dispositif selon l'invention, le circuit de retard 22 comporte des moyens pour délivrer une pluralité de signaux électriques de commande, les différents signaux étant retardés respectivement, par rapport à chaque signal électrique délivré par le récepteur 10, d'une pluralité d'intervalles de temps différents, de façon que le générateur laser 16 émette, à chaque formation d'image, une pluralité d'impulsions laser. Les retards sont calculés par le circuit de traitement 23 de façon que les différents points lumineux soient situés sur des lignes de balayage différentes d'une même image. De cette manière, on forme sur l'écran 33 de la caméra une image d'un objet factice, formée d'une pluralité de points. La figure 4 représente un exemple d'une telle image. On voit sur cette figure que les points de l'image sont disposés sur différentes lignes de balayage 43 à 48. Sur chaque ligne, telle que 48 peuvent être disposés plusieurs points tels que 49 à 52. Dans l'exemple donné, ces points forment sensiblement l'image d'une maison. Cette image est décalée par rapport au point lumineux formé par le faisceau émis par le générateur laser 1. La formation de l'image de l'objet factice sur l'écran de la caméra incite l'adversaire à diriger le tir de son artillerie dans la direction de cette image, le dispositif de détection (ainsi que l'installation militaire disposé éventuellement à proximité) est donc préservé.

Il est possible aussi d'utiliser des temps de retard variables dans le temps. On forme ainsi une fausse image mobile afin de perturber un système automatique de pointage adverse.

Le dispositif de détection selon l'invention peut être utilisé pour détecter une caméra infrarouge adverse disposée sur un char de combat. Cette détection est effectuée sans dévoiler à l'ennemi la position du dispositif de détection. Elle s'accompagne de la formation, sur l'écran de visualisation de la caméra détectée, d'une image d'un objet factice, formée d'un ou de plusieurs points. Cette image est décalée par rapport à la direction du dispositif de détection, de sorte que l'adversaire est incité à pointer le tir de son artillerie dans une fausse direction.

## Revendications

1. Dispositif (24) pour détecter une caméra infrarouge adverse (25), cette caméra comportant un système de balayage périodique (29) par lignes de l'énergie infrarouge située dans un secteur de l'espace, un système optique convergent (26) capable de concentrer l'énergie infrarouge balayée par le système de balayage, un détecteur électro-optique infrarouge (28) disposé pour recevoir l'énergie concentrée par le système optique et un système de visualisation (33) relié au système de balayage et à la sortie électrique du détecteur pour former sur un écran l'image thermique du secteur, ledit dispositif (24) comportant
 - un générateur laser (1) émettant un premier faisceau infrarouge (2),
 - un réflecteur orientable (4) pour diriger ledit faisceau infrarouge (2, 3) vers la caméra, le système optique de la caméra renvoyant alors vers le réflecteur des signaux infrarouges,
 - un récepteur électro-optique infrarouge (10) disposé pour recevoir lesdits signaux infrarouges réfléchis par le réflecteur, ce récepteur comportant une première et une deuxième sorties électriques, le récepteur délivrant sur sa première sortie (14) des signaux électriques de réception représentatifs de l'intensité des signaux infrarouges et délivrant sur sa deuxième sortie (11) des signaux électriques d'écartométrie représentatifs de l'écart entre un point de référence de la surface sensible du récepteur et les points de réception sur cette surface des signaux infrarouges,
 - un système d'asservissement (13) relié à la deuxième sortie (11) électrique du récepteur pour recevoir les signaux électriques d'écartométrie, ce système étant apte à commander l'orientation du réflecteur de façon à diminuer ledit écart,
 - un télémètre électro-optique (53)
 - et des moyens d'orientation (54) du télémètre vers la caméra adverse, ces moyens étant reliés au système d'asservissement de l'orientation du réflecteur, le télémètre étant capable de délivrer périodiquement l'information de la distance de ladite caméra, un premier point lumineux (41) étant formé sur l'écran de la caméra adverse (25) chaque fois que le système de balayage dirige vers le détecteur l'énergie du faisceau laser infrarouge concentré par le système optique, celui-ci renvoyant vers le dispositif (24), par effet catadioptrique, un signal infrarouge constitué par une partie de cette énergie concentrée, le récepteur délivrant en réponse un signal électrique de réception sur sa première sortie électrique (14), caractérisé en ce que le dispositif comporte en outre
 - un circuit de traitement (23) relié au télémètre (53) pour recevoir l'information de la distance de ladite caméra adverse (25), et relié à la première sortie électrique (14) du récepteur (10) pour mesurer les intervalles de temps entre les signaux électriques de réception, de façon à déterminer la fréquence de formation des lignes et la fréquence de formation des images du système de balayage de ladite caméra, ce circuit de traitement étant apte à déterminer un temps de retard à partir de la distance de la caméra et de ces fréquences,
 - un circuit de retard (22), connecté au circuit de traitement (23) pour délivrer, à la cadence de formation des images, un signal électrique de commande retardé dudit temps de retard par rapport au signal de réception
 - et des moyens (16) pour émettre un deuxième faisceau infrarouge (17) formé d'une suite d'impulsions laser vers le réflecteur (4) parallèlement à l'axe d'émission du générateur laser (1), ces moyens étant connectés au circuit de retard (22) de façon qu'une impulsion soit émise chaque fois qu'un signal électrique de commande est émis, cette impulsion laser (17) étant réfléchie vers la caméra (25) par le réflecteur et apparaissant sur l'écran de la caméra sous forme d'un deuxième point lumineux (39) très intense, le temps de retard déterminé par le circuit de traitement étant supérieur à une valeur minimale et inférieure à une valeur maximale, la valeur minimale étant déterminée pour que ledit deuxième point représente une image d'un objet factice dont la distance au dispositif est supérieure à une distance prédéterminée, la valeur maximale étant déterminée pour que ledit deuxième point provoque un éblouissement de l'écran, cet éblouissement étant assez fort pour que ledit premier point (41) ne soit plus visible.

2. Dispositif selon la revendication 1, caractérisé en ce que lesdits moyens pour émettre le deuxième faisceau infrarouge (17) comportent ledit générateur laser (1), et moyens pour déclencher l'émission de ladite suite d'impulsions par ledit générateur (1).

3. Dispositif selon la revendication 1, caractérisé en ce que le circuit de retard (22) comporte des moyens pour faire varier dans le temps la durée dudit temps de retard.

4. Dispositif selon la revendication 1, caractérisé en ce que
 - il comporte d'autres circuits de retard connectés au circuit de traitement (23), de manière à pouvoir délivrer d'autres signaux électriques de commande retardés respectivement de différents temps de retard par rapport auxdits signaux électriques
 - et que lesdits moyens (16) pour émettre un deuxième faisceau infrarouge (17) formé d'une suite d'impulsions laser sont connectés aux circuits de retard, de façon à émettre, à la fréquence de formation des images de la caméra, une impulsion laser chaque fois qu'un signal électrique de commande est délivré, le circuit de traitement étant capable de déterminer les différents retards de façon que l'image apparaissant sur l'écran de la caméra comprenne une pluralité de points (49 à 52) représentant un objet matériel factice.

5. Dispositif selon la revendication 1, caractérisé en ce que ledit premier faisceau infrarouge (2) émis par le générateur laser (1) est continu.

6. Dispositif selon la revendication 1, caractérisé en ce que ledit premier faisceau infrarouge (2) émis par le générateur laser (1) est formée d'une suite d'impulsions.

7. Dispositif selon la revendication 1, caractérisé en ce que ledit temps de retard est la moyenne arithmétique entre ladite valeur minimale et ladite valeur maximale.

**Patentansprüche**

1. Vorrichtung (24) zum Aufspüren einer feindlichen Infrarotkamera (25), die ein periodisches Zeilenabtastsystem (29) der in einem Raumsektor angeordneten Infrarotenergie, ein optisches Konvergenzsystem (26), das die vom Abtastsystem erfasste Infrarotenergie konzentrieren kann, einen elektro-optischen Infrarotdetektor (28), der so angeordnet ist, dass er die vom optischen System konzentrierte Energie empfangen kann, und ein Anzeigesystem (33) aufweist, das mit dem Abtastsystem und dem elektrischen Ausgang des Detektors verbunden ist, um auf einem Schirm das Wärmebild des Sektors zu bilden, wobei die Vorrichtung (24) enthält
– einen Lasergenerator (1), der ein erstes Infrarotstrahlenbündel (2) aussendet,
– einen ausrichtbaren Reflektor (4), um das Infrarotbündel (2, 3) auf die Kamera zu richten, wobei das optische System der Kamera dann Infrarotsignale zum Reflektor zurücksendet,
– einen elektro-optischen Infrarotempfänger (10), der so angeordnet ist, dass er die vom Reflektor reflektierten Infrarotsignale empfängt, wobei dieser Reflektor einen ersten und einen zweiten elektrischen Ausgang aufweist und der Empfänger an seinem ersten Ausgang (14) elektrische Empfangssignale, die für die Intensität der Infrarotsignale repräsentativ sind, und an seinem zweiten Ausgang (11) elektrische Abstandsmessungs-Signale liefert, die für den Abstand zwischen einem Bezugspunkt der empfindlichen Oberfläche des Empfängers und den Empfangspunkten der Infrarotsignale auf dieser Oberfläche repräsentativ sind,
– ein Nachführungssystem (13), das mit dem zweiten elektrischen Ausgang (11) des Empfängers verbunden ist, um die elektrischen Abstandsmessungs-Signale zu empfangen, wobei dieses System die Ausrichtung des Reflektors so steuern kann, dass der Abstand vermindert wird,
– ein elektro-optisches Telemeter (53),
– und Mittel (54) zur Ausrichtung des Telemeters in Richtung auf die feindliche Kamera, wobei diese Mittel mit dem Nachführungssystem der Ausrichtung des Reflektors verbunden sind und das Telemeter periodisch die Information der Entfernung der Kamera liefern kann, wo ein erster Lichtpunkt (41) auf dem Bildschirm der feindlichen Kamera (25) jedesmal dann gebildet wird, wenn das Abtastsystem die Energie des vom optischen System konzentrierten Infrarotlaserbündels auf den Detektor richtet, wobei das optische System ein Infrarotsignal durch catadioptrischen Effekt zur Vorrichtung (24) zurücksendet, das aus einem Teil dieser konzentrierten Energie besteht, wobei der Empfänger als Antwort ein elektrisches Empfangssignal an seinem ersten elektrischen Ausgang (14) liefert, dadurch gekennzeichnet, dass die Vorrichtung weiter aufweist
– einen Verarbeitungskreis (23), der mit dem Telemeter (53) verbunden ist, um die Information bezüglich der Entfernung der feindlichen Kamera (25) zu empfangen, und der an den ersten elektrischen Ausgang (14) des Empfängers (10) angeschlossen ist, um die Zeitintervalle zwischen den elektrischen Empfangssignalen zu messen und so die Zeilenfrequenz und die Bildfrequenz des Abtastsystems der Kamera zu bestimmen, wobei dieser Verarbeitungskreis eine Verzögerungszeit ausgehend von dem Abstand der Kamera und diesen Frequenzen bestimmen kann,
– einen Verzögerungskreis (22), der mit dem Verarbeitungskreis (23) verbunden ist, um im Rhythmus der Bildfrequenz ein elektrisches Steuersignal zu liefern, das um die Verzögerungszeit in bezug auf das Empfangssignal verzögert ist,
– und Mittel (16), um ein zweites aus einer Folge von Laserimpulsen bestehendes Infrarotstrahlenbündel (17) parallel zur Sendeachse des Lasergenerators (1) zum Reflektor (4) zu senden, wobei diese Mittel mit dem Verzögerungskreis (22) so verbunden sind, dass ein Impuls jedesmal dann ausgesandt wird, wenn ein elektrisches Steuersignal ausgesandt wird, wobei dieser Laserimpuls (17) vom Reflektor auf die Kamera (25) reflektiert wird und auf dem Bildschirm der Kamera in Form eines zweiten, sehr intensiven Lichtpunkts (39) erscheint, wobei die vom Verarbeitungskreis bestimmte Verzögerungszeit länger als ein Minimalwert und kürzer als ein Maximalwert ist, wobei der Minimalwert so bestimmt wird, dass der zweite Punkt ein Bild eines künstlichen Objektes zeigt, dessen Entfernung zur Vorrichtung grösser ist als eine vorbestimmte Entfernung, während der Maximalwert so bestimmt ist, dass der zweite Punkt eine Blendung des Bildschirms bewirkt, wobei diese Blendung stark genug ist, damit der erste Punkt (41) nicht mehr sichtbar ist.

2. Vorrichtung nach Anspruch 1, dadurch gekennzeichnet, dass die Mittel zum Aussenden des zweiten Infrarotstrahlenbündels (17) den Lasergenerator (1) und Mittel zum Auslösen der Aussendung der Impulsfolge durch den Generator (1) enthalten.

3. Vorrichtung nach Anspruch 1, dadurch gekennzeichnet, dass der Verzögerungskreis (22) Mittel aufweist, um die Dauer der Verzögerungszeit zeitlich zu variieren.

4. Vorrichtung nach Anspruch 1, dadurch gekennzeichnet, dass
- sie weitere Verzögerungskreise enthält, die mit dem Verarbeitungskreis (23) so verbunden sind, dass sie andere elektrische Steuersignale liefern können, die je um unterschiedliche Verzögerungszeiten in bezug auf die elektrischen Signale verzögert sind,
- und dass die Mittel (16) zum Aussenden eines zweiten aus einer Folge von Laserimpulsen gebildeten Infrarotstrahlenbündels (17) mit den Verzögerungskreisen verbunden sind, um im Takt der Bildfrequenz der Kamera einen Laserimpuls jedesmal dann zu auszusenden, wenn ein elektrisches Steuersignal geliefert wird, wobei der Verarbeitungskreis die verschiedenen Verzögerungen so bestimmen kann, dass das auf dem Bildschirm der Kamera erscheinende Bild eine Vielzahl von Punkten (49 bis 52) aufweist, die ein künstliches materielles Objekt repräsentieren.

5. Vorrichtung nach Anspruch 1, dadurch gekennzeichnet, dass das vom Lasergenerator (1) ausgesandte erste Infrarotstrahlenbündel (2) ein Dauerlaserstrahl ist.

6. Vorrichtung nach Anspruch 1, dadurch gekennzeichnet, dass das vom Lasergenerator (1) ausgesandte erste Infrarotstrahlenbündel (2) aus einer Folge von Impulsen besteht.

7. Vorrichtung nach Anspruch 1, dadurch gekennzeichnet, dass die Verzögerungszeit das arithmetische Mittel zwischen dem Minimalwert und dem Maximalwert ist.

**Claims**

1. A device (24) for the detection of an enemy infrared camera (25), this camera including a periodical line scanning system (29) of the infrared energy situated in a space sector, a convergent optical system (26) able to concentrate the infrared scanned by the scanning system, an electro-optical infrared detector (28) positioned to receive the energy concentrated by the optical system and a display system (33) connected to the scanning system and to the electrical output of the detector to form on a screen the thermal image of the sector, said device (24) including

- a laser generator (1) transmitting a first infrared bundle (2),
- an orientable reflector (4) for directing said infrared bundle (2, 3) to the camera, the optical system of the camera then sending infrared signals back to the reflector,
- an infrared electro-optical receiver (10) placed in such a way so as to receive said infrared signals refleced by the reflector, this receiver including a first and a second electrical output, the receiver supplying on its first output (14) electrical reception signals representing the intensity of the infrared signals and supplying on its second output (11) electrical distance meter signals re-. presenting the distance between a reference point on the sensitive surface of the receiver and the reception points of the infrared signals on this surface,
- a servo-control system (13) connected to the second electrical output (11) of the receiver to receive the electrical distance meter signals, this system being able to control the orientation of the reflector in order to reduce said distance,
- an electro-optical distance meter (53),
- and orientation means (54) for directing the distance meter in relation to the enemy camera, these means being connected to the servo-control system for directing the reflector, this distance meter being able to indicate periodically the information concerning the distance of said camera, a first light spot (41) being created on the screen of the enemy camera (25) each time the scanning system directs the infrared laser beam energy which has been concentrated by the optical system to the detector, the optical system sending back to the device (24), by a catadioptric effect, an infrared signal made of part of this concentrated energy, the receiver supplying in return an electrical reception signal on its first electrical output (14), characterized in that the device further includes
- a processing circuit (23) connected to the distance meter (53) to receive the indication of the enemy camera (25) distance, and connected to the first electrical output (14) of the receiver (10) to measure the time intervals between the electrical reception signals, in order to determine the line rate and the picture rate of the scanning system of said camera, this processing circuit being able to determine a delay time from the distance of the camera and of these rates,
- a delay circuit (22) connected to the processing circuit (23) to supply, at the picture rate, an electrical control signal delayed by said delay time in relation to the reception signal,
- and means (16) for transmitting a second infrared bundle (17) formed by a succession of laser pulses towards the reflector (4) in parallel with the transmission axis of the laser generator (1), these means being connected to the delay circuit (22) so that a pulse is transmitted each time an electrical control signal is transmitted, this laser pulse (17) being reflected towards the camera (25) by the reflector and appearing on the camera screen as a second very bright spot (39), the delay time determined by the processing circuit being greater than a minimum value and smaller than a maximum value, the minimum value being determined so that said second spot represents a picture of a dummy object, the distance of which to the device is greater than a predetermined distance, the maximum value being determined so that said second spot causes a dazzling effect on the screen, this dazzling being sufficiently strong for the first spot (41) to be no more visible.

2. A device according to claim 1, characterized in that said means for transmitting the second infrared bundle (17) include said generator (1) and means for activating the transmission of said succession of pulses by said generator (1).

3. A device according to claim 1, characterized in that the delay circuit (22) includes means to make said delay time variable in time.

4. A device according to claim 1, characterized in that

– it includes other delay circuits connected to the processing circuit (23), so that it can supply other electrical control signals delayed respectively by various delay times in relation to said electrical signals,

– and that said means (16) for transmitting a second infrared bundle (17) formed by a succession of laser pulses are connected to the delay circuits so as to transmit, at the camera picture rate, a laser pulse each time an electrical control signal is supplied, the processing circuit being able to determine the various delays so that the picture appearing on the screen of the camera includes several spots (49 to 52) representing a material dummy object.

5. A device according to claim 1, characterized in that said first infrared bundle (2) transmitted by the laser generator (1) is continuous.

6. A device according to claim 1, characterized in that the infrared bundle (2) transmitted by the laser generator (1) is constituted by a series of pulses.

7. A device according to claim 1, characterized in that said delay time is the arithmetic average between said minimum value and said maximum value.

FIG.1

# FIG.2

# FIG.3

# FIG.4

0 127 870